# EUROPEAN PATENT SPECIFICATION

(11) **EP 0 734 915 B1**
(45) Date of publication and mention of the grant of the patent: **09.06.1999**
(21) Application number: 96104990.5
(22) Date of filing: 28.03.1996
(51) Int. Cl.: B60R 21/20, B29C 45/56, B29C 45/26, B29C 37/00

(54) **Manufacturing method of pad**
Herstellungsverfahren für eine Abdeckung
Procédé de fabrication d'un couvercle

(30) Priority: 31.03.1995 JP 7641095
(43) Date of publication of application: 02.10.1996
(73) Proprietor: Toyoda Gosei Co., Ltd., Nishikasugai-gun, Aichi (JP)
(72) Inventor: Yamamoto, Tadashi, Nishikasugai-gun, Aichi (JP)
(74) Representative: Koepe, Gerd L., Dipl.-Chem.

(56) References cited:
- FR-A- 2 700 041
- GB-A- 2 241 663
- US-A- 5 316 822
- US-A- 5 342 086
- US-A- 5 447 327
- US-A- 5 447 328

## Description

The present invention relates to a method for manufacturing a pad used with an air bag device. The air bag device may be installed on a steering wheel, in front of a passenger's seat, or on doors or seats of automobiles. The pad has a thin breakable portion which is severed upon inflation of the air bag.

Conventionally, pads of this type are made of synthetic resin formed by injection molding or a deep drawing / laminating process. They have a thin breakable portion (sometimes referred to as a tear line) which breaks or splits open when the air bag inflates so that the air bag protrudes from the pad at the time of inflation. The breakable portion has a thinner notch portion for smooth breaking even if the pad is made of soft and elastic material.

The aforementioned breakable portion provided with the aforementioned notch portion is formed in the following manner, as disclosed in Japanese Patent Publication No. JP-A-2-248238 & US-A-5,180,187. The pad is formed by a deep drawing / laminating process but initially without the notch portion. After that, the breakable portion is partially melted by heat to form the notch portion therein by high frequency embossing

It needs laborious operation, so that the process and cost of manufacturing the pad are increased.

In case the pad is formed by injection molding, it is necessary to provide a mold cavity to form the pad with a narrow portion where the gap of the cavity is extremely narrow in order to form the notch portion simultaneously with injection molding of the pad. However, molding failure easily occurs when the narrow portion is provided in the cavity, because molding material cannot flow smoothly at the narrow portion. Therefore, injection molding which can provide the notch portion is very difficult.

British patent application GB-A-2241663 discloses an injection molding method for manufacturing a molded pad for use in an airbag device, having at least one groove formed therein, which is severed upon inflation of the airbag, said method comprising the steps of:
- injecting a thermoplastic molding material into a molding cavity of a mold;
- projecting at least one groove forming member into the mold cavity;
- cooling and thereby hardening said thermoplastic molding material; and
- removing the hardened thermoplastic molding material from the mold cavity and thereby obtaining the molded pad, having at least one groove portion formed therein.

The object of the present invention is to provide a method for manufacturing a pad which can reduce the manufacturing steps and manufacturing cost even if a notch portion is provided at the breakable portion.

A manufacturing method of a pad according to the present invention comprises the steps defined in claim 1.
Figs. 1(a) and (b) are sectional views of an embodiment of the present invention, taken along the line I-I in Fig. 3;
Fig. 2 is a sectional view of a pad manufactured by the embodiment of the present invention;
Fig. 3 is a bottom view of the pad manufactured by the embodiment of the present invention; and

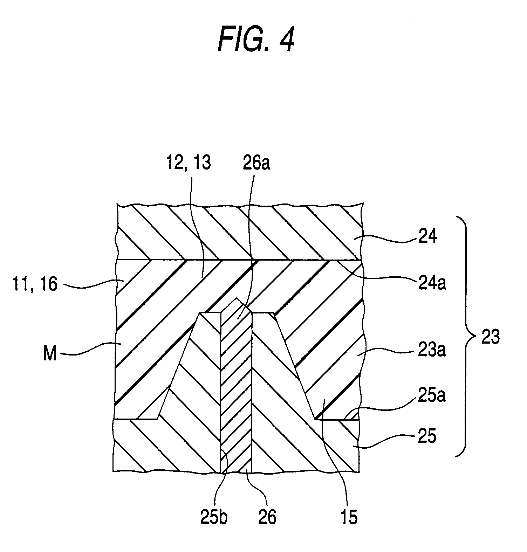

Fig. 4 is a sectional view of another embodiment.

An embodiment of the present invention will be described with reference to the attached drawings.

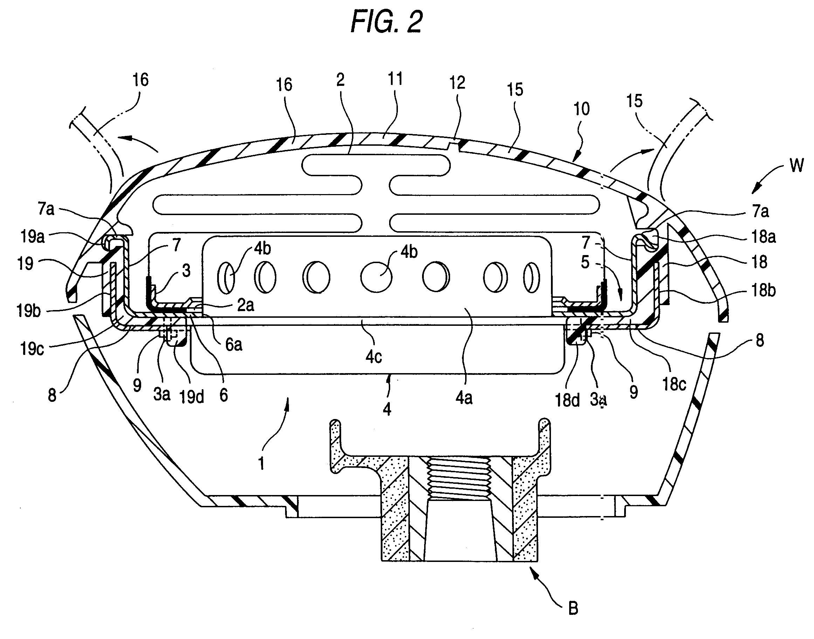

A pad 10 is used as a cover for an air bag device 1. The air bag device 1 is installed, for example, on the upper portion of the boss portion B of a steering wheel W, as shown in Fig. 2.

The air bag device 1 generally includes a folded air bag 2, an inflator 4 for supplying the air bag 2 with gas for inflation, the pad 10 for covering the folded air bag 2, and a bag holder 5 holding the air bag 2, the inflator 4, and the pad 10.

The air bag 2 has an opening 2a at the lower portion thereof. The inflator 4 comprises, for example, a substantially cylindrical body 4a having gas ejecting holes 4b provided in the upper part thereof, and a flange portion 4c which is formed around the body 4a.

The bag holder 5 is made of a metal plate and comprises a rectangular bottom wall 6 having an inserting hole 6a in the middle thereof, and four side-walls 7 extending upward from the periphery of the bottom wall 6. A hook 7a for retaining respective side-wall parts 18, 19, 20, and 21 of the pad 10 is formed at the upper end of each side-wall 7.

The air bag 2 and inflator 4 are fixed to the bag holder 5 in such a manner that an annular retainer 3 is inserted through the opening 2a into the air bag 2 and disposed within the air bag 2. A plurality of bolts 3a extending downwardly from the retainer 3 are inserted through a peripheral portion of the air bag 2 about opening 2a, the peripheral edge of the inserting wall 6a of the bag holder 6, the flange portion 4c of the inflator, and bracket 8 and are retained there with corresponding nuts 9.

The bracket 8 is made from sheet metal, for example, and is inserted into inserting grooves 18b and 19b formed at the lower surface of the side-wall part 18 and 19, thereby pinching and holding the pad 10 in cooperation with the hook 7a of the side-wall 7.

The pad 10 is made from, for example, thermoplastic elastomer such as polyolefin, styrene, or the like, or soft synthetic resin such as soft vinyl chloride or the like, and is preferably formed by injection molding. The pad 10 includes an upper wall part 11 and the four side-wall parts 18, 19, 20, and 21 protruding from the back surface of the upper wall part 11 in the form of the substantially quadrilateral cylinder.

The upper wall part 11 is provided with a groove-like breakable portion or tear line 12 having, for example, a substantially H-shaped form as viewed from underneath. In general, breakable portion 12 is configured in such a manner that it allows flap portions 15, 16, having the transverse rod portion of the H-shape of the breakable portion 12 therebetween, to be opened like French doors upon inflation of the air bag 2, as seen in phantom in Fig. 2. The breakable portion 12 includes two straight portions 12a in the transverse portion of the H-shape, adjacent to the a vertical portions of the H-shape. The straight portions 12a are provided with a plurality of notch portions 14 which are thinner than an overall thickness of the breakable portion 12.

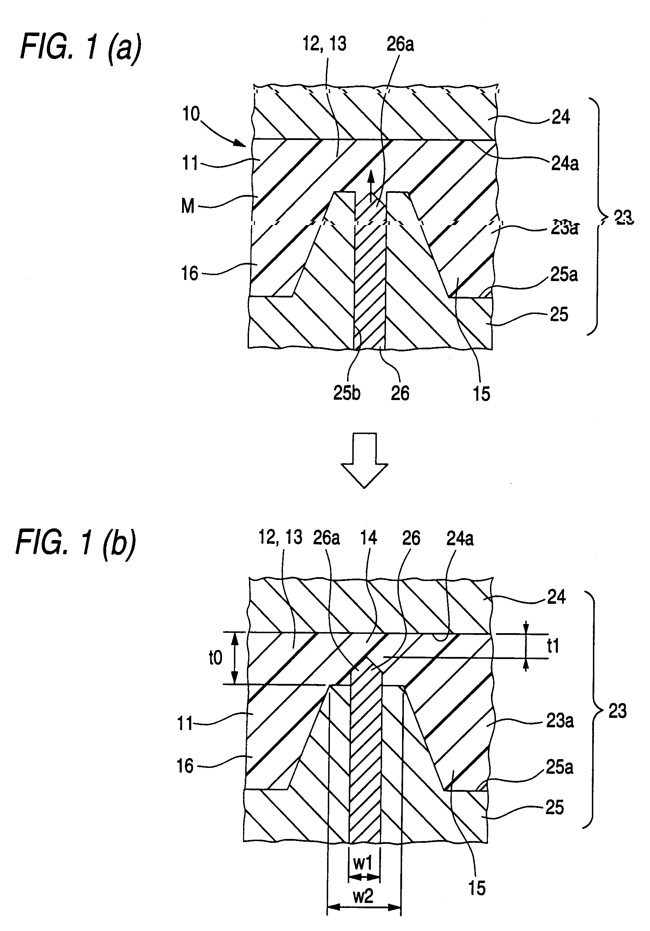

In order to prevent sinks or the like of the breakable portion 12 and the notch portions 14 from occurring on the outer peripheral surface of the upper wall part 11, the thickness t1 of the notch portion 14 is between about 0.6 and 1.2mm and the thickness to the breakable portion 12 other than at the notch portions 14 is between about 0.8mm and 2.5mm. In the present embodiment, t1 is 0.8mm and t0 is 1.5mm (see Fig. 1(b)).

Similarly, the width dimension w1 of the notch portions 14 is between about 0.5 and 1.5mm and the width dimension w2 of the breakable portion 12 is between about 1.0 and 3.0mm. In the present embodiment, w1 is 0.7mm and w2 is 2.0mm.

Retaining grooves 18a, 19a are respectively formed on the inner peripheral surface of the front and rear side-wall parts 18, 19 of the pad 10. The hooks 7a of the side-wall 7 of the bag holder 5 are retained in respective retaining grooves 18a, 19a. Further, insertion grooves 18b, 19b, into which the associated portions of bracket 8 are inserted, are formed at the lower surfaces of the front and rear side-wall parts 18, 19 (see Fig. 2).

In the present embodiment, extended parts 18c, 19c of the pad 10 extend inwardly at the lower surface of the side-wall parts 18, 19 and have protrusions 18d, 19d at the end thereof. The protrusions 18d, 19d are retained by the bracket 8 fixed to the bottom wall 6 by the bolts 3a and the nuts 9, so that the extended parts 18c, 19c serve to strongly secure the side-wall parts 18, 19 to the bag holder 5. The side-wall parts 18 and 19 experience large pulling forces when the breakable portion 12 of the pad 10 severs during air bag inflation.

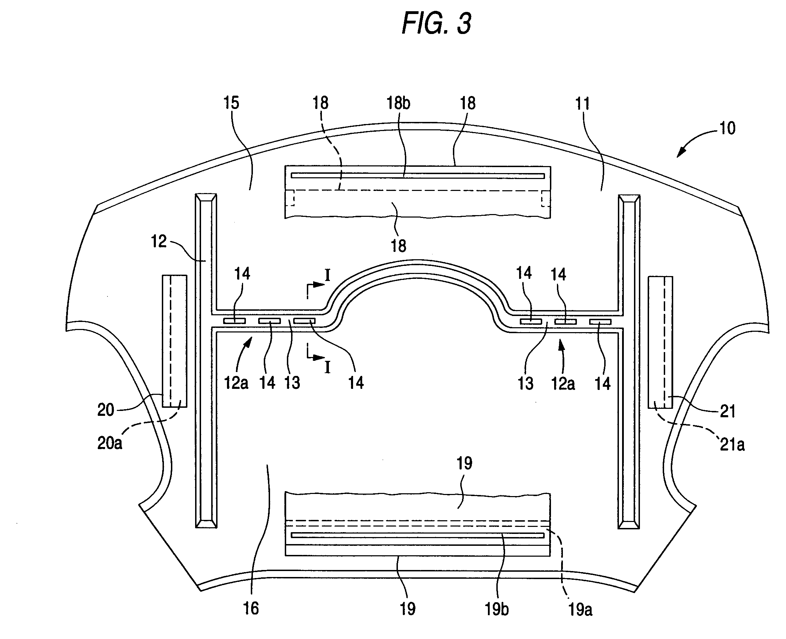

The right and left side-wall parts 20, 21 have securing grooves 20a, 21a capable of receiving the associated hook portions 7a of the side-wall 7 at the inner circumferential surface thereof (see Fig. 3).

As shown in Fig. 1(a), a mold 23 to be used for molding the above pad 10 comprises divided mold portions 24, 25 provided with shaped mold surfaces 24a, 25a. Mold portion 25, which molds the lower side of the pad 10, has a plurality of engagement holes 25b at the specific locations at which the notch portions 14 of the breakable portion 12 are formed. A notch forming member 26 is slidably disposed in each engagement hole 25b.

Mold portion 25 also has a slide core (not shown) which is capable of molding the extended parts 18c, 19c of the side-wall parts 18, 19. Upon molding, the extended parts 18c, 19c are formed not bent inward, but extended downward. Accordingly, the extended parts 18c, 19c are bent inward when the air bag device is later assembled.

Now the molding method using the above mold 23 is explained. Molding material M for forming the pad 10 is injected into mold cavity 23a after the mold portions 24, 25 are fastened together. At this time, as shown in Fig. 1(a), the notch forming member 26 is on stand-by so as not to protrude from the mold surface 25a of the mold portion 25.

After the molding material M is completely injected, the notch forming member 26 is raised up, as shown in Fig. 1(b). The molding material M is thereafter hardened by cooling the mold portions 24, 25. The finished pad 10 is obtained by opening the mold and removing the hardened molding material M from the mold.

The pad 10 manufactured according to the above process is assembled into the air bag device 1 in the following manner. Each hook 7a of the side-wall 7 of the bag holder 5 is engaged in respective securing grooves 18a, 19a, 20a, 21a of the side-wall parts 18, 19, 20, 21. The brackets 8, 8 are inserted into the inserting grooves 18b, 19b while the extended parts 18c, 19c are bent inward. Finally, the brackets 8, 8 are fixed to the bag holder 5 to assemble the pad into the air bag device 1. It is noted that the folded air bag 2 and the inflator 4 are previously assembled into the bag holder 5 by utilizing the retainer 3, before the pad 10 is attached.

The air bag device 1 constructed as described is assembled into the steering wheel W and the steering wheel W is installed on the automobile. When the air bag 2 is inflated by the gas from the inflator 4, the breakable portion 12 breaks or splits open, starting with the notch portion 14. At this time, the flap portions 15, 16 open and the air bag 2 protrudes from the pad 10 and is inflated to its full extent.

In the manufacturing method of the pad 10 of this embodiment, the cavity 23a of the mold does not have a narrow portion where the gap of the cavity is extremely narrow in order to form the notch portion 14. Therefore, the molding material M flows smoothly, so that molding failures do not occur.

Further, the slidable notch forming member 26 is previously inserted into the molding portion of the breakable portion 12 before the molding material hardens. Accordingly, the notch forming member 26 can be extended into the molding portion of the breakable portion 12 smoothly. The notch portion 14 having a predetermined thickness can be formed easily after the inserted portion hardens.

Accordingly, the manufacturing method of this embodiment can produce the pad 10 having the breakable portion 12 provided with the notch portion 14 while the molding material hardens. The manufacturing steps and manufacturing cost can be reduced since processing after injection molding can be omitted.

In the manufacturing method as described above, the notch forming member 26 is initially retracted so as not to protrude from the mold surface 25a. However, the air existing between a tip 26a of the notch forming member 26 and the inner circumferential surface of the engagement hole 25b may become involved in the molding material M. In order to solve this problem, the notch forming member 26 can be protruded from the mold surface 25a in such a manner that the gap between the circumferential surface of the tip 26a and the inner circumferential surface of the engagement hole 25b is eliminated. Therefore, the molding material M can smoothly flow. The tip 26a is therefore not worn away.

Further, the notch portion 14 of the breakable portion 12 is formed intermittently in the above embodiment. But the notch portion may be also formed continuously.

The location of the notch portion 14 is not limited to that shown in this embodiment since the notch portion is only the point where the pad begins to split or break.

## Claims

1. A method for manufacturing a molded pad (10) for use in an airbag device, having at least one groove (12) with at least one notch portion (14) formed therein, which is severed upon inflation of the airbag, said method comprising the steps of:
- injecting a thermoplastic molding material into a mold cavity (23a) of a mold (23), wherein said mold cavity (23a) is shaped so as to form a groove portion (12) in the pad (10);
- projecting at least one notch forming member (26) having a V-shape cross section into the mold cavity (23a) at a location along the intended groove portion (12) in the pad (10);
- cooling and thereby hardening said thermoplastic molding material; and
- removing the hardened thermoplastic molding material from the mold cavity (23a) and thereby obtaining the molded pad (10), having at least one notch portion (14) formed in the groove portion(12).

2. The process according to claim 1, wherein said projecting step is performed before said injecting step.

3. The process according to claim 1, wherein said projecting step is performed after said injecting step.

4. The process according to claim 3, wherein said projecting step is performed while said thermoplastic molding material is soft.

5. The process according to any of the claims 1 to 4, wherein said projecting step comprises projecting a plurality of notch forming members (26) into the mold cavity (23a).

6. The process according to any of the claims 1 to 5, wherein said injection step comprises slidably extending said at least one notch forming member (26) until an end portion thereof projects into the mold cavity (23 a).

7. The process according to any of the claims 1 to 6, wherein said thermoplastic molding material is a thermoplastic polyolefin elastomer.

## Patentansprüche

1. Verfahren zur Herstellung einer geformten Abdeckung (10) zur Verwendung in einer Airbag-Vorrichtung, die wenigstens eine Rille (12) mit wenigstens einem darin gebildeten Kerbbereich (14) aufweist, der nach dem Aufblasen des Airbags getrennt wird, wobei das Verfahren die Schritte umfaßt, daß man:
- eine thermoplastische Formmasse in einen Formenhohlraum (23a) einer Form (23) einspritzt, wobei der Formenhohlraum (23a) so gestaltet ist, daß ein Rillenbereich (12) in der Abdeckung (10) ausgebildet wird;
- wenigstens ein Kerb-Formelement (26), das im Querschnitt eine V-Form aufweist, in den Formenhohlraum (23) an einer Stelle entlang des beabsichtigten Rillenbereichs (12) in der Abdeckung (10) ausfahren läßt;
- die thermoplastische Formmasse abkühlt und dadurch aushärtet; und
- die gehärtete thermoplatische Formmasse aus dem Formenhohlraum (23a) entfernt und dadurch die geformte Abdeckung (10) erhält, die wenigstens einen Kerbbereich (14), der in dem Rillenbereich (12) ausgebildet ist, aufweist.

2. Verfahren nach Anspruch 1, worin der Ausfahrschritt vor dem Einspritzschritt durchgeführt wird.

3. Verfahren nach Anspruch 1, worin der Ausfahrschritt nach dem Einspritzschritt durchgeführt wird.

4. Verfahren nach Anspruch 3, worin der Ausfahrschritt durchgeführt wird, während die thermoplatische Formmasse weich ist.

5. Verfahren nach einem der Ansprüche 1 bis 4, worin der Ausfahrschritt ein Ausfahren einer Vielzahl von Kerb-Formelementen (26) in den Formenhohlraum (23a) umfaßt.

6. Verfahren nach einem der Ansprüche 1 bis 5, worin der Einspritzschritt das gleitende Ausfahren des wenigstens einen Kerb-Formelements (26) umfaßt, bis dessen Endbereich in den Formenhohlraum (23a) hineinragt.

7. Verfahren nach einem der Ansprüche 1 bis 6, worin die thermoplastische Formmasse ein thermoplastisches Polyolefin-Elastomer ist.

## Revendications

1. Procédé de fabrication d'un coussin moulé (10) destiné à être utilisé dans un dispositif à air-bag, comportant au moins une rainure (12) dotée, formée en son sein, d'au moins une partie formant encoche (14), qui est rompue lors du gonflage de l'air-bag, ledit procédé comprenant les étapes consistant à :
- injecter une matière moulable thermoplastique à l'intérieur d'une cavité de moule (23a) d'un moule (23), dans lequel ladite cavité de moule (23a) est formée de façon à former une partie formant rainure (12) dans le coussin (10) ;
- faire saillir au moins un élément de formation d'encoche (26) ayant une section transversale en forme de V à l'intérieur de la cavité de moule (23a) à un emplacement le long de la partie formant rainure prévue (12) dans le coussin (10) ;
- refroidir et ainsi faire durcir ladite matière moulable thermoplastique ; et
- enlever la matière moulable thermoplastique durcie de la cavité de moule (23a) et obtenir ainsi le coussin moulé (10), comportant au moins une partie formant encoche (14) formée dans la partie formant rainure (12) .

2. Procédé selon la revendication 1, dans lequel ladite étape de saillie est exécutée avant ladite étape d'injection.

3. Procédé selon la revendication 1, dans lequel ladite étape de saillie est exécutée après ladite étape d'injection.

4. Procédé selon la revendication 3, dans lequel ladite étape de saillie est exécutée pendant que ladite matière moulable thermoplastique est molle.

5. Procédé selon l'une quelconque des revendications 1 à 4, dans lequel ladite étape de saillie comprend l'étape consistant à faire saillir une pluralité d'éléments de formation d'encoche (26) à l'intérieur de la cavité de moule (23a).

6. Procédé selon l'une quelconque des revendications 1 à 5, dans lequel ladite étape d'injection comprend l'étape consistant à étendre de façon coulissante ledit au moins un élément de formation d'encoche (26) jusqu'à ce que sa partie d'extrémité fasse saillie à l'intérieur de la cavité de moule (23a).

7. Procédé selon l'une quelconque des revendications 1 à 6, dans lequel ladite matière moulable thermoplastique est un élastomère polyoléfinique thermoplastique.
